# EUROPÄISCHE PATENTSCHRIFT

(11) **EP 1 525 081 B1**
(45) Veröffentlichungstag und Bekanntmachung des Hinweises auf die Patenterteilung: **26.11.2014**
(21) Anmeldenummer: 03784156.6
(22) Anmeldetag: 02.08.2003
(51) Int. Cl.: B29C 37/00, B29C 43/18, B05D 1/40, B29C 45/14, B60R 13/02

(54) **FORMPRESS-VERFAHREN ZUR HERSTELLUNG EINES TRÄGERS MIT EINER KUNSTSTOFF-PRESSHAUT**
COMPRESSION MOLDING METHOD FOR PRODUCING A SUPPORT WITH A PLASTIC SURFACE FILM
PROCEDE DE MOULAGE PAR COMPRESSION DESTINE A LA FABRICATION D'UN SUPPORT COMPORTANT UNE PELLICULE DE MOULAGE PLASTIQUE

(30) Priorität: 02.08.2002 DE 10235406
(43) Veröffentlichungstag der Anmeldung: 27.04.2005
(73) Patentinhaber: Toyota Boshoku Kabushiki Kaisha, Kariya-shi, Aichi 448-8651 (JP)
(72) Erfinder: HÖLZEL, Dominik, 92178 Puchheim (DE)
(74) Vertreter: Von Kreisler Selting Werner - Partnerschaft von Patentanwälten und Rechtsanwälten mbB
(86) Internationale Anmeldenummer: PCT/EP2003/008579
(87) Internationale Veröffentlichungsnummer: WO 2004/014630

(56) Entgegenhaltungen:
- EP-A- 0 425 240
- EP-A- 0 732 182
- DE-A- 3 800 218
- DE-A- 10 101 112
- DE-A- 19 755 111
- DE-C- 4 316 154

## Beschreibung

Die Erfindung betrifft ein Verfahren zur Herstellung eines Trägers einer lackierten Kunststoff-Presshaut, die Verwendung des Verfahrens zur Herstellung von Verkleidungsteilen für den Kraftfahrzeug-Innenraum sowie die so erhältlichen Verkleidungsteile.

Die Herstellung von Kunststoff-Gießhäuten ist im Stand der Technik an sich bekannt. So beschreibt die DE 198 34 747 A1 ein Verfahren zur Herstellung einer Kunststoff-Gießhaut, wobei ein Kunststoff-Gießmaterial in einen Spaltraum eines Gießformwerkzeugs eingebracht wird, das ein mit einem Formhohlraum ausgebildetes Formunterteil und ein Formoberteil aus mehreren Stempeln aufweist. Am Formunterteil wird eine Folie festgelegt, die den Formhohlraum überdeckt. Anschließend werden in den Formhohlraum die Stempel hineinbewegt, wobei die Folie gespannt und zu mindestens teilweise an das Formoberteil angelegt wird. Danach wird in den Spaltraum zwischen dem Formunterteil und dem Formoberteil das Kunststoff-Gießmaterial eingegossen. Dabei wird auch die Folie gegen die Formoberfläche des Formoberteils gedrückt. Die Kunststoff-Gießhaut kann dann aus dem Gießformwerkzeug entnommen werden oder im Formunterteil verbleiben und in an sich bekannter Weise hinterschäumt werden.

Das in der DE 198 34 747 A1 beschriebene Verfahren hat sich als wenig zweckmäßig erwiesen, da hier ein Ersetzen der Folie nach wenigen Durchgängen erforderlich ist. Ursache hierfür ist, dass die Folie als Dichtung des Gießformwerkzeugs fungiert und dementsprechend einer hohen thermischen und mechanischen Belastungen beim Schließen des Gießformwerkzeugs ausgesetzt wird.

DE 100 02 633 A1 beschreibt ein Verfahren zur Herstellung von Bauteilen im Motorraum von Kraftfahrzeugen mit thermoplastischem Werkstoffen. Gegenstand der Publikation ist ein Verfahren zur Herstellung von Bauteilen im Motorraum mit einem höheren Integrationsgrad, wobei mindestens ein thermoplastisches Polymer vorplastifiziert und das Plastifikat im plastischen Zustand in ein Presswerkzeug definiert abgelegt und in einem anschließenden Pressvorgang geformt wird.

DE 197 55 111 A1 betrifft ein lackiertes Kunststoffteil. Gewebeverstärkte Kunststoffformteile sind geeignet, Karosseriebleche zu ersetzen, wobei jedoch das Lackieren solcher Formteile häufig Schwierigkeiten bereitet, da sich die Gewebeverstärkung in der Lackschicht abzeichnet. Dies ist nur mit hohen Füllermengen und gegebenenfalls Anschleifen in den Griff zu bekommen. Bei dem Verfahren wird das gewebeverstärkte Kunststoffformteil (10) in einer Matrize (2) geformt und anschließend von der Matrize etwas abgehoben. In den hierdurch entstandenen Spalt zwischen dem Kunststoffformteil (10) und der Matrize (2) wird eine Lackmasse (12) eingespritzt, die durch Niederfahren des Stempels (6) zwischen dem Kunststoffformteil (10) und der Innenform (9) der Matrize (2) verteilt wird. Durch Aufrechterhaltung eines Nachdrucks während der Aushärtung der Lackschicht mittels des Stempels (6) wird ein Abzeichnen der Gewebestruktur auf der Lackoberfläche vermieden.

DE 691 31 459 T2 (EP 0 492 532 B1) betrifft ein Verfahren zur Herstellung eines mehrschichtigen Formkörpers. Das Verfahren zum Herstellen eines mehrschichtigen Formgegenstands umfasst die folgenden Schritte:
Anordnen einer faserverstärkten Harzlage (7) zwischen einem Paar aus einer oberen und einer unteren Form (1,2) auf der unteren Form, wobei die Harzlage außerhalb der Formen vorgewärmt wird,
Zuführen einer Harzschmelze (9) eines thermoplastischen Harzes zwischen der oberen Form (2) und der faserverstärkten Harzlage (7) von einer in der unteren Form (1) bereitgestellten Harzzuführöffnung (4) durch ein in die faserverstärkte Harzlage (7) eingebrachtes Loch, während der Zufuhr der Harzschmelze (9) oder sobald das Zuführen des Harzes beendet wurde erfolgendes Schließen der Formen, um die Harzschmelze (9) fließen zu lassen und sie zu formen, um einen mehrschichtigen Formgegenstand herzustellen, der die faserverstärkte Harzlage (7) und eine Hautschicht aus dem thermoplastischen Harz aufweist, die integriert schichtförmig auf die Harzlage (7) aufgebracht ist, wobei die Harzschmelze unter Einstellen der Rate des Absenkens der oberen Form (2) auf bis zu 30 mm/s zugeführt wird, wenn der Zwischenraum zwischen der oberen und der unteren Form (1,2) von (c+5) bis (c+100) mm reicht, wobei c die Dicke des herstellenden Gegenstandes ist.

DL 11522 VII/28b betrifft ein Verfahren zum Herstellen von Lederformteilen. Dieses Verfahren ist dadurch gekennzeichnet, dass das für das Formteil zugeschnittene Lederstück zugleich mit einem auf das Lederstück aufgelegten thermoplastischen härtbaren Werkstoff in einer der gewünschten Form entsprechenden Presse der Einwirkung von Wärme und Druck ausgesetzt wird.

Aus der DE-C-43 16 154 ist ein Verfahren zur Herstellung eines Trägers mit einer lackierten Kunststoff-Presshaut bekannt. Im Gegensatz zur vorliegenden Erfindung, handelt es sich dabei um eine Schicht.

Bei der Herstellung von Kunststoff-Pressteilen nach dem Stand der Technik sind verschiedene Probleme aufgetreten. Hierbei handelt es sich im wesentlichen darum, dass beim Auspressen von thermoplastischen Kunststoff-Formmassen allein eine minderwertige Oberflächenqualität erzielt wird. Beim Hinterpressen von Dekoren und Folien mit thermoplastischen Kunststoff-Formmassen sind die Dekore und Folien sehr hohen Drücken und Temperaturen ausgesetzt, welche die Oberflächenqualität stark mindern.

Demgegenüber besteht die Aufgabe der vorliegenden Erfindung darin, ein Verfahren zu Herstellung eines Trägers mit einer lackierten Kunststoff-Presshaut zur Verfügung zu stellen, das insbesondere ohne die in der DE 198 34 747 A1 beschriebenen Folie sowie mit wesentlich niedrigeren Drücken auskommt.

Die vorgenannte Aufgabe wird in einer ersten Ausführungsform gelöst durch ein Verfahren zur Herstellung eines Trägers mit einer lackierten Kunststoff-Presshaut 1, wobei man in einem Presswerkzeug, das ein mit einem Formhohlraum ausgebildetes Formunterteil 3 und ein Formoberteil 4 aufweist, das Formunterteil 3 mit einer Oberflächenbeschichtung versieht, einen Träger 5 in das Presswerkzeug einbringt und anschließend ein duroplastisches Kunststoff-Pressmaterial 2 in das offene Presswerkzeug einbringt, das Presswerkzeug schließt und das Kunststoff-Pressmaterial 2 durch den Werkzeughub im Formhohlraum verteilt, wobei der Träger 5 teilweise oder nahezu vollständig mit der Kunststoff-Presshaut 1 versehen wird.

Kern der vorliegenden Erfindung ist somit das Auspressen von Kunststoff-Formmassen vor der Aushärtung und/oder Vernetzung, das beispielsweise aus der Trägerherstellung von Türseitenverkleidungen bekannt ist. Erfindungsgemäß wird beispielsweise ein Lack in das offene Werkzeug eingetragen, die Formmasse im offenen oder geschlossenen Werkzeug abgelegt bzw. in den erweiterten Werkzeugspalt eingespritzt. Anschließend wird die Formmasse durch den Werkzeughub im Werkzeug verteilt und der in der Form befindliche Träger mit einer sogenannten A-Oberfläche versehen.

Die erfindungsgemäß hergestellte Kunststoff-Presshaut vereinigt die Vorteile beider Verfahren des Standes der Technik:
▪ Hohe Narbqualität
▪ Kleine Radien
▪ leichte Einstellung des Glanzgrads
▪ gute Haptik
▪ kein Schäum- bzw. Kaschierprozess
▪ Bauteile mit und ohne Umbug sind möglich
▪ Klebstoff freie Verbindung von Haut und Träger

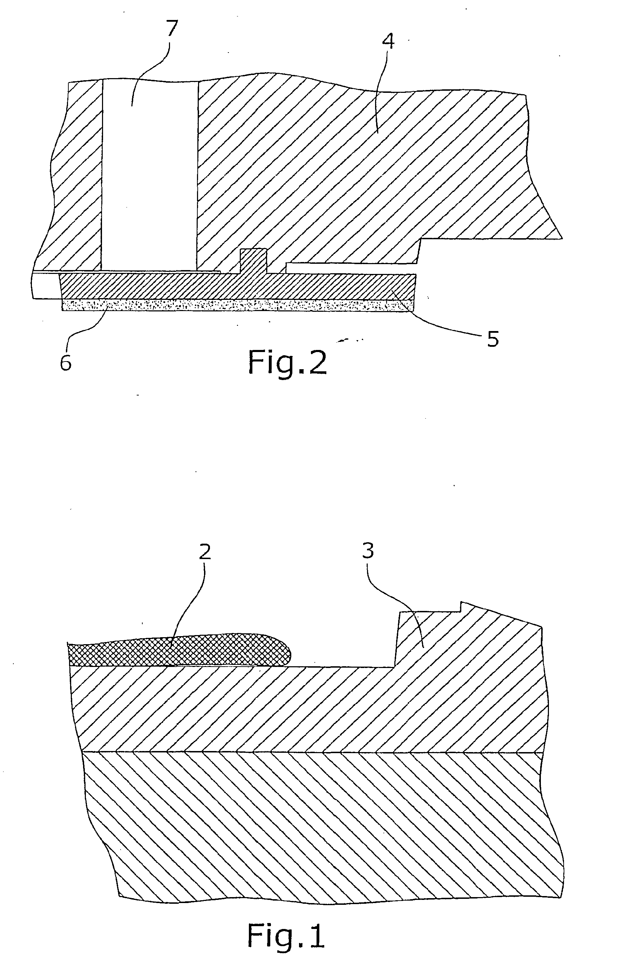

In den Fig. 1 bis 3 wird die Erfindung näher erläutert.

Wesentlicher Bestandteil des erfindungsgemäßen Verfahrens, wie in Fig. 1 dargestellt, ist das Einbringen eines Kunststoff-Pressmaterials 2 in ein Presswerkzeug, das in der Fig. 1 präzisiert wird. Hier wird das lackierte Formunterteil 3 mit dem Kunststoff-Pressmaterial 2 versehen.

In der Fig. 2 wird das Formoberteil 4 des Presswerkzeugs dargestellt. An diesem Formoberteil 4 ist ein Träger 5 befestigt, der beispielsweise frontseitig mit einer Schaumstoff-Folie 6 kaschiert ist. Der Träger wird beispielsweise durch eine Vakuumansaug-Einrichtung 7 in dem Formoberteil 4 fixiert. Der Träger 5 liegt nicht vollflächig an der Formoberteil 4 an, so dass ein Hinterpressen des Trägers im Umbug möglich ist.

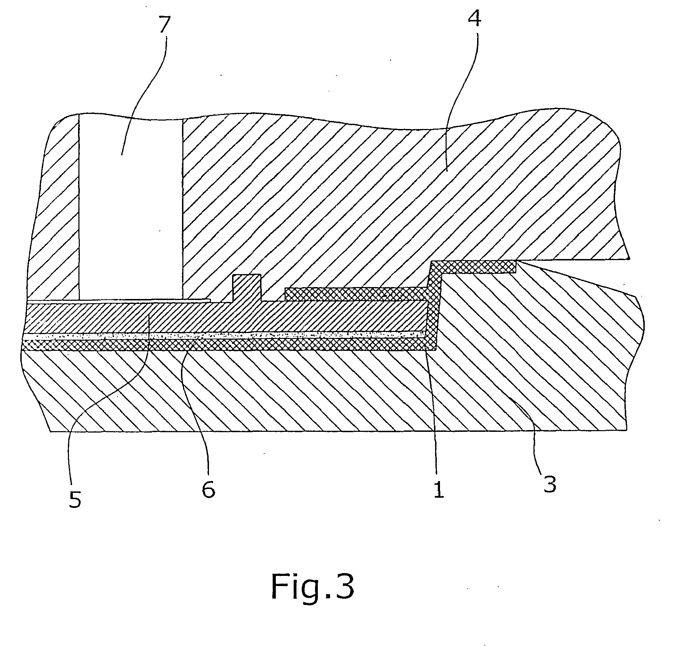

In der Fig. 3 wird das geschlossene Presswerkzeug dargestellt, bei dem der Formhohlraum vollständig durch die Kunststoff-Presshaut, den Träger 5 und die Schaumstoff-Folie 6 ausgefüllt ist.

Als Kunststoff-Pressmaterial 2 wird im Sinne der vorliegenden Erfindung ein duroplastisches Kunststoffmaterial, beispielsweise aus Polyurethan (PU), Epoxidharz (EP) oder thermoplastischen Kunststoffen wie beispielsweise thermoplastisches Polyurethan (TPU) eingesetzt.

Während im Stand der Technik vor der Einbringung des Kunststoff-Pressmaterials 2 eine Trennfolie in den Formhohlraum des Presswerkzeugs eingebracht wird, wird erfindungsgemäß vorzugsweise der Formhohlraum mit einem Formtrennmittel versehen. Hierbei können an sich im Stand der Technik bekannte sprühfähige Trennmittel eingesetzt werden, die im Handel erhältlich sind. Beispielsweise werden in der WO 99/61 215 geeignete Formtrennmittel beschrieben, die in Form einer Wasser-Öl-Dispersion vorliegen.

Für den Fall, der Herstellung einer Kunststoff-Presshaut auf einem Träger 5, wird dieser vor Einbringung des Kunststoff-Pressmaterials 2 in das Presswerkzeug eingebracht. Hierbei ist es möglich, die Oberfläche des Trägers 5 teilweise oder vollständig mit der Kunststoff-Presshaut 1 zu versehen. Ein nahtloses Bedecken des Trägers 5 auf allen Seiten mit der Kunststoff-Presshaut 1 ist nicht in einem Arbeitsschritt möglich, da der Träger 5 im Presswerkzeug gehalten werden muss. Wird allerdings der Träger 5 nur durch wenige Abstandshalter daran gehindert in dem Formhohlraum aufzuschwimmen oder abzutauchen, so ist ein praktisch vollständiges Bedecken der Oberfläche des Trägers 5 mit der Kunststoff-Presshaut 1 möglich.

Eine besondere Ausführungsform der vorliegenden Erfindung besteht darin, dass man einen Träger 5 einbringt, dessen Oberfläche teilweise oder vollflächig mit einer Schaumstoff-Folie 6 kaschiert ist. Bei Durchführung des erfindungsgemäßen Verfahrens wird die freiliegende Oberfläche der Schaumstoff-Folie 6 durch die Kunststoff-Presshaut 1 bedeckt.

Erfindungsgemäß ist es möglich, vor Einbringung des Kunststoff-Pressmaterial 2 in das Presswerkzeug, das Formunterteil 3 oder das Formoberteil 4 jeweils partiell oder vollständig mit einem In-Mould-Painting, Textilien, Folien und/oder Leder zu belegen. Diese Oberflächen werden dann auf ihrer Rückseite mit dem Kunststoff-Pressmaterial 2 in Kontakt gebracht, so dass eine Kunststoff-Presshaut 1 bzw. ein Träger 5 mit einer Kunststoff-Presshaut 1 entsprechend den Vorbehandlungsschritten eine geeignete Oberfläche (A-Surface) aufweist.

Mit Hilfe der vorliegenden Erfindung ist es möglich, Kunststoff-Presshäute 1 mit einer außerordentlich geringen Dicke herzustellen. In dem Falle, dass der Formhohlraum mit einem Abstand des vom Formunterteil 3 zum Formoberteil 4 von 0,4 bis 10,0 mm, insbesondere 0,6 bis 1,0 mm versehen ist, wird auch eine Kunststoff-Presshaut 1 der entsprechenden Dicke hergestellt.

Nachdem die miteinander zu verbindenden Materialien in das Presswerkzeug eingebracht worden sind, wird das Presswerkzeug geschlossen und das Kunststoff-Pressmaterial 2 durch den Werkzeughub im Formhohlraum verteilt. Man belässt die eingebrachten Teile für eine definierte Zeit im Presswerkzeug zur Reaktion und/oder Verteilung des Kunststoff-Pressmaterials 2 in dem Formhohlraum. Alternativ ist es auch möglich, das Material der Kunststoff-Presshaut in ein geschlossenes Werkzeug einzuspritzen.

Nach dem Öffnen des Presswerkzeugs wird die Kunststoff-Presshaut oder der mit einer Kunststoff-Presshaut 1 versehene Träger 5 entnommen.

Das vorgenannte Verfahren eignet sich besonders zur Herstellung von Innenverkleidungen von Kraftfahrzeugen, da hier prägnante Materialübergänge und scharfe Radien darstellbar sind. Die Narbtreue auch bei Höhensprüngen ist außerordentlich gut. Gleiches gilt für die Haptik, die Beeinflussbarkeit von Glanz und Farbe sowie für den Farb- und Narbwechsel im Bauteil. Bei Verwendung von Polyurethan als Kunststoff-Pressmaterial 2 sind auch der Geruch, die mechanischen Eigenschaften nach Wärmelagerung, die Kratzfestigkeit und die Emissionen gut bis sehr gut.

Die Werkzeugstandzeiten sind ebenso wie die Materialkosten wenigstens zufriedenstellend.

Dementsprechend besteht eine weitere Ausführungsform der vorliegenden Erfindung in Kraftfahrzeug-Innenverkleidungen mit einem Träger 5, der teilweise oder nahezu vollständig mit einer Kunststoff-Presshaut 1 versehen ist, die nach einem Verfahren wie oben definiert auf den Träger 5 aufgebracht worden ist.

Besonders bevorzugt im Sinne der vorliegenden Erfindung weisen die Innenverkleidungen Oberflächen auf, bei denen Bereiche der Kunststoff-Presshaut 1 partiell mit einem In-Mould-Painting, Textilien, Folien und/oder Leder belegt ist.

## Patentansprüche

1. Verfahren zur Herstellung eines Trägers mit einer lackierten Kunststoff-Presshaut (1), wobei man in einem Presswerkzeug, das ein mit einem Formhohlraum ausgebildetes Formunterteil (3) und ein Formoberteil (4) aufweist, das Formunterteil (3) mit einer Lackierung versieht, einen Träger (5) in das Presswerkzeug einbringt und anschließend ein duroplastisches Kunststoff-Pressmaterial (2) in das offene Presswerkzeug einbringt, das Presswerkzeug schließt und das Kunststoff-Pressmaterial (2) durch den Werkzeughub im Formhohlraum verteilt, wobei der Träger (5) teilweise oder nahezu vollständig mit der **lackierten** Kunststoff-Presshaut (1) versehen wird.

2. Verfahren nach Anspruch 1, **dadurch gekennzeichnet, dass** man als ein duroplastisches Kunststoffmaterial, aus Polyurethan (PU), Epoxidharz (EP) oder einen thermoplastischen Kunststoff, insbesondere thermoplastisches Polyurethan (TPU) einsetzt.

3. Verfahren nach Anspruch 1 oder 2, **dadurch gekennzeichnet, dass** man den Formhohlraum vor Einbringung des Kunststoff-Pressmaterials (2) mit einem Formtrennmittel versieht.

4. Verfahren nach Anspruch 3, **dadurch gekennzeichnet, dass** man einen Träger (5) einbringt, dessen Oberfläche teilweise mit einem Schaum (6) kaschiert ist.

5. Verfahren nach einem der Ansprüche 1 bis 4, **dadurch gekennzeichnet, dass** man das Formunterteil (4) partiell mit einem In-Mould-Painting, Textilien, Folien und/oder Leder belegt.

6. Verfahren nach einem der Ansprüche 1 bis 4, **dadurch gekennzeichnet, dass** man ein Presswerkzeug einsetzt, das einen Formhohlraum mit einem Abstand des Formunterteils (3) zum Formoberteil (4) von 0,4 bis 10,0 mm, insbesondere 0,6 bis 1,0 mm aufweist.

7. Verwendung des Verfahrens nach einem der Ansprüche 1 bis 6, zur Herstellung von Innenverkleidungen von Kraftfahrzeugen.

8. Innenverkleidungen von Kraftfahrzeugen mit einem Träger (5), der teilweise oder nahezu vollständig mit einer Kunststoff-Presshaut (1) versehen ist, die nach einem Verfahren gemäß einem der Ansprüche 1 bis 6 auf den Träger (5) aufgebracht worden ist.

9. Innenverkleidungen nach Anspruch 8, **dadurch gekennzeichnet, dass** die Oberfläche partiell mit einem In-Mould-Painting, Textilien, Folien und/oder Leder belegt ist.

## Claims

1. A process for preparing a support with a painted compression-molded plastic skin (1), wherein, in a compression mold having a lower mold (3) designed with a mold cavity, and an upper mold (4), said lower mold (3) is provided with a painting, a support (5) is introduced in the compression mold, and subsequently a thermosetting plastic compression material (2) is introduced into the open mold, the mold is closed, and said plastic compression material (2) is distributed in the mold cavity by the mold stroke, wherein said support (5) is partially or almost completely provided with the painted compression-molded plastic skin (1).

2. The process according to claim 1, **characterized in that** a polyurethane (PU), epoxy resin (EP) or a thermoplastic material, especially a thermoplastic polyurethane (TPU), is employed as said thermosetting plastic material.

3. The process according to claim 1 or 2, **characterized in that** said mold cavity is provided with a mold release agent before said plastic compression material (2) is introduced.

4. The process according to claim 3, **characterized in that** a support (5) whose surface is partially backed with a foam (6) is introduced.

5. The process according to any of claims 1 to 4, **characterized in that** said lower mold (4) is partially coated with an in-mold painting, textiles, sheets and/or leather.

6. The process according to any of claims 1 to 4, **characterized in that** a compression mold is employed that has a mold cavity with a distance of the lower mold (3) from the upper mold (4) of from 0.4 to 10.0 mm, especially from 0.6 to 1.0 mm.

7. Use of the process according to any of claims 1 to 6 for preparing interior trims of motor vehicles.

8. Interior trims of motor vehicles comprising a support (5), which is partially or almost completely provided with a compression-molded plastic skin (1) applied to said support (5) by a process according to any of claims 1 to 6.

9. Interior trims according to claim 8, **characterized in that** said surface is partially coated with an in-mold painting, textiles, sheets and/or leather.

## Revendications

1. Procédé pour la fabrication d'un support avec une peau de moulage en plastique peinte (1), dans lequel le moule inférieur d'un moule de compression ayant un moule inférieur (3) formé avec une cavité et un moule supérieur (4) est revêtu d'une peinture, un support (5) est introduit dans le moule de compression, et ensuite un matériau à mouler en plastique thermodurcissable (2) est introduit dans le moule de compression ouvert, le moule de compression est fermé, et le matériau à mouler en plastique (2) est distribué dans la cavité par la course du moule, dans lequel ledit support (5) est procuré avec ladite peau de moulage en plastique peinte (1) partiellement ou presque complètement.

2. Procédé selon la revendication 1, **caractérisé en ce qu'**un polyuréthane (PU), une résine époxy (EP) ou une matière thermoplastique, notamment un polyuréthane thermoplastique (TPU), est utilisé comme plastique thermodurcissable.

3. Procédé selon la revendication 1 ou 2, **caractérisé en ce que** la cavité du moule est procurée d'un agent de démoulage avant que le matériau à mouler en plastique soit introduit.

4. Procédé selon la revendication 3, **caractérisé en ce qu'**un support (5) dont la surface est partiellement doublée d'une mousse (6) est introduit.

5. Procédé selon l'une quelconque des revendications 1 à 4, **caractérisé en ce que** le moule inférieur (4) est partiellement recouvert d'une peinture appliquée dans le moule, de textiles, de feuilles et/ou de cuir.

6. Procédé selon l'une quelconque des revendications 1 à 4, **caractérisé en ce que** le moule de compression utilisé comporte une cavité avec une distance du moule inférieur (3) au moule supérieur (4) de 0,4 à 10,0 mm, notamment de 0,6 à 1,0 mm.

7. Utilisation du procédé selon l'une quelconque des revendications 1 à 6 pour la fabrication de pièces de garniture intérieure pour véhicules à moteur.

8. Pièces de garniture intérieure pour véhicules à moteur avec un support (5) procuré partiellement ou presque complètement avec une peau de moulage en plastique (1), qui a été appliquée sur ledit support (5) par un procédé selon l'une quelconque des revendications 1 à 6.

9. Pièces de garniture intérieure selon la revendication 8, **caractérisées en ce que** leur surface est partiellement recouverte d'une peinture appliquée dans le moule, de textiles, de feuilles et/ou de cuir.
